Europäisches Patentamt

European Patent Office

Office européen des brevets

(11) Veröffentlichungsnummer: **0 660 246 A2**

## (12) EUROPÄISCHE PATENTANMELDUNG

(21) Anmeldenummer: **94203670.8**

(51) Int. Cl.⁶: **G06F 17/10**

(22) Anmeldetag: **19.12.94**

(30) Priorität: **23.12.93 DE 4344157**

(43) Veröffentlichungstag der Anmeldung:
**28.06.95 Patentblatt 95/26**

(84) Benannte Vertragsstaaten:
**DE FR GB IT**

(71) Anmelder: **Philips Patentverwaltung GmbH**
**Wendenstrasse 35c**
**D-20097 Hamburg (DE)**
(84) **DE**

(71) Anmelder: **PHILIPS ELECTRONICS N.V.**
**Groenewoudseweg 1**
**NL-5621 BA Eindhoven (NL)**
(84) **FR GB IT**

(72) Erfinder: **Lorenz, Dietmar, Dipl.-Ing., c/o**
**Philips**
**Patentverwaltung GmbH,**
**Wendenstrasse 35c**
**D-20097 Hamburg (DE)**
Erfinder: **Bauer, Harald, Dipl.-Ing., c/o Philips**
**Patentverwaltung GmbH,**
**Wendenstrasse 35c**
**D-20097 Hamburg (DE)**
Erfinder: **Dietsch, Rainer, Dipl.-Ing., c/o**
**Philips**
**Patentverwaltung GmbH,**
**Wendenstrasse 35c**
**D-20097 Hamburg (DE)**
Erfinder: **Hellwig, Karl, Dipl.-Ing., c/o Philips**
**Patentverwaltung GmbH,**
**Wendenstrasse 35c**
**D-20097 Hamburg (DE)**

(74) Vertreter: **Walz, Erich et al**
**Philips Patentverwaltung GmbH**
**Wendenstrasse 35 c**
**D-20097 Hamburg (DE)**

(54) **Signalprozessor.**

(57) Die Erfindung betrifft einen Signalprozessor mit einer ersten Datenverarbeitungseinheit (4) mit Mitteln zur Verarbeitung von Daten durch arithmetische oder logische Operationen und ein Funkgerät mit einem solchen Signalprozessor.

Zur Erhöhung der Rechengeschwindigkeit wird vorgeschlagen, insbesondere bei der Berechnung von Autokorrelationsfunktionen oder Kreuzkorrelationsfunktionen oder bei der digitalen Filterung mit FIR-Filtern mindestens eine weitere zur ersten Datenverarbeitungseinheit (4) parallel arbeitende Datenverarbeitungseinheit (5) mit Mitteln (17, 18, 19) zur Verarbeitung von Daten, die aus den der ersten Datenverarbeitungseinheit (4) zugeführten Daten abgeleitet werden, durch arithmetische oder logische Operationen vorzusehen.

FIG.2

Die Erfindung betrifft einen Signalprozessor mit einer Datenverarbeitungseinheit mit Mitteln zur Verarbeitung von Daten durch arithmetische oder logische Operationen. Die Erfindung betrifft auch ein Funkgerät mit einem Signalprozessor mit einer Datenverarbeitungseinheit mit Mitteln zur Verarbeitung von Daten durch arithmetische oder logische Operationen.

Funkgeräte für Mobilfunk müssen in der Lage sein, komplexe Algorithmen zur Sprachverarbeitung in Echtzeit umzusetzen. In der Regel werden dazu Signalprozessoren verwendet. Ein Einsatz von speziellen für diesen Anwendungsfall entwikkelten Chips ist eine andere mögliche technische Lösung. Signalprozessoren sind spezielle Mikrocomputer für Echtzeitanwendungen. Weitere Anwendungsgebiete von Signalprozessoren sind beispielsweise Audio-, Video-, Medizin-, Kraftfahrzeug-Technik. Aus dem Aufsatz "Digitale Signalprozessoren, erster Teil: Prozessoren für besondere Aufgaben" von M. Kappelan und H. Mucke, Funkschau 16/1993, Seiten 66 bis 69, ist ein Signalprozessor der eingangs genannten Art bekannt. Der Prozessor weist eine Datenverarbeitungseinheit auf, die über zwei Datenbusse mit zwei Datenspeichern gekoppelt ist. Eine Adressierungseinheit adressiert über zwei Adressbusse die jeweiligen in den Datenspeichern abgelegten Daten, die über die beiden Datenbusse der Datenverarbeitungseinheit zugeführt werden. Die Datenverarbeitungseinheit besteht aus einem eingangsseitig angeordneten Multiplizierer, einem Addierer und einem Akkumulator. Da der Multiplizierer zwei zu multiplizierende Daten parallel über die beiden Datenbusse empfängt, kann innerhalb eines Befehlszyklus eine Multiplikation und eine Addition durchgeführt werden.

Manche Signalprozessoren besitzen Datenverarbeitungseinheiten, die in der Lage sind, zwei empfangene Daten in einem Befehlszyklus zu multiplizieren, die Summe aus dem erhaltenen Produkt und dem alten Akkumulatorinhalt zu bilden und den Akkumulator mit dieser Summe zu überschreiben. Bei anderen Signalprozessoren kann bei der Addition nur ein in einem Zwischenspeicher abgelegtes Multiplikationsergebnis aus einem zurückliegenden Befehlszyklus verwendet werden. Eine Initialisierung der Datenverarbeitungseinheit solcher Signalprozessoren erfordert wegen des zusätzlichen Zwischenspeichers einen zusätzlichen Befehlszyklus. Eine Verarbeitung von Daten durch die Datenverarbeitungseinheit erfolgt durch "Pipeline"-Verarbeitung, bei der empfangene Daten in mehreren Stufen, d.h. Befehlszyklen, verarbeitet werden. Dazu weist die Datenverarbeitungseinheit bei einer zweistufigen "Pipeline"-Verarbeitung zwei Empfangsregister und einen Akkumulator als Ausgangsregister auf. Bei bestimmten Signalprozessoren ist wie oben beschrieben ein zusätzlicher Zwischenspeicher erforderlich, so daß sich eine dreistufige "Pipeline"-Verarbeitung ergibt.

Die Berechnung einer Produktsumme bzw. eines Skalarproduktes aus zwei Datenvektoren ist eine typische Anwendung eines Signalprozessors, z.B. bei der Berechnung von Autokorrelationsfunktionen, Kreuzkorrelationsfunktionen oder bei der digitalen Signalverarbeitung mit FIR-Filtern. Bei sehr rechenzeitintensiven und in Echtzeit durchzuführenden Algorithmen, wie beispielsweise im digitalen Mobilfunk, kann die Rechengeschwindigkeit von Signalprozessoren gemäß dem Stand der Technik nicht ausreichend sein. Eine Erhöhung der Rechengeschwindigkeit durch Parallelschaltung von weiteren Datenverarbeitungseinheiten, denen über zusätzliche Datenbusse Daten zugeführt werden, ist technisch aufwendig und kostspielig.

Der Erfindung liegt daher die Aufgabe zugrunde, einen Signalprozessor zu schaffen, dessen Rechengeschwindigkeit bei geringem zusätzlichen technischen Aufwand erhöht ist.

Die Aufgabe wird bei einem Signalprozessor der eingangs genannten Art dadurch gelöst, daß mindestens eine zur Datenverarbeitungseinheit parallel arbeitende weitere Datenverarbeitungseinheit mit Mitteln zur Verarbeitung von aus den der Datenverarbeitungseinheit zugeführten Daten abgeleiteten Daten vorgesehen ist.

Ein solcher Signalprozessor weist gegenüber einem Signalprozessor mit nur einer Datenverarbeitungseinheit für alle die Fälle eine erhöhte Rechengeschwindigkeit auf, bei denen die der ersten Datenverarbeitungseinrichtung zugeführten Daten oder aus diesen abgeleitete Zwischen- oder Ausgangswerte der ersten Datenverarbeitungseinheit von mindestens einer weiteren parallel zur ersten Datenverarbeitungseinheit arbeitenden Datenverarbeitungseinheit ausgewertet werden. Dazu ist jede auf diese Weise arbeitende weitere Datenverarbeitungseinheit mit der ersten Datenverarbeitungseinheit gekoppelt. Besonders vorteilhaft ist es weiterhin, eine dritte weitere Datenverarbeitungseinheit über mindestens eine andere weitere Datenverarbeitungseinheit mit der ersten Datenverarbeitungseinheit zu koppeln. In diesen Fällen erfolgt eine Weitergabe von Eingangswerten, d.h. zugeführten Daten, der ersten Datenverarbeitungseinheit bzw. von Zwischen- oder Ausgangswerten der ersten Datenverarbeitungseinheit an eine zweite Datenverarbeitungseinheit, deren Eingangs-, Zwischen- oder Ausgangswerte an eine dritte Datenverarbeitungseinheit übertragen werden. Der vierten Datenverarbeitungseinheit werden Eingangs-, Zwischen- oder Ausgangswerte der zweiten oder der dritten Datenverarbeitungseinheit zugeführt. Auf diese Weise lassen sich beliebig viele weitere parallel arbeitende Datenverarbeitungseinheiten anordnen. Bei einem solchen Signalprozessor sind zusätzlich zu Datenbussen, die zur Lieferung von Daten an die erste Datenverarbeitungseinrichtung vorgesehen sind, keine weiteren Datenbusse erforderlich. Der zusätzliche technische Aufwand beschränkt sich im wesentlichen auf die schaltungstechnische Realisierung der weiteren Datenverarbeitungseinheiten. Insbesondere der zusätzliche Flächenbedarf auf einem Chip, auf dem der Signalprozessor realisiert ist, ist im Vergleich zur Realisierung von zusätzlichen Datenbussen gering. Unter die in den Datenverarbeitungseinheiten durchgeführten arithmetischen Operationen zählen sowohl Multiplikation und Division als auch Addition und Subtraktion. Beispiele für logische Operationen sind die UND-, NICHT-, ODER oder Exklusiv-ODER-Verknüpfung.

Die Erfindung wird dadurch ausgestaltet, daß vorgesehen ist, die den Mitteln der ersten Datenverarbeitungseinheit zugeführten Daten im gleichen und/oder in einem anderen Befehlszyklus den Mitteln mindestens einer weiteren Datenverarbeitungseinheit zuzuführen.

In vielen Anwendungsfällen werden zur Berechung von Ergebniswerten durch die Datenverarbeitungseinheiten identische Datenvektoren verwendet, deren Komponenten gleich den zu verarbeitenden Daten sind. Mehrere Ergebniswerte können somit in einer Anzahl von Befehlszyklen ermittelt werden, die der Anzahl an Komponenten des jeweiligen Datenvektors entspricht. Werden Komponenten eines Datenvektors, der von der ersten Datenverarbeitungseinheit zur Bestimmung eines Ergebniswertes verarbeitet wird, nur teilweise zur Bestimmung eines weiteren Ergebniswertes benötigt und ist der Standort der gleichen Daten in den entsprechenden Datenvektoren versetzt, so ist eine Verarbeitung der gleichen Daten in unterschiedlichen Befehlszyklen durch die Datenverarbeitungseinheiten sinnvoll, um eine parallele Berechnung von Ergebniswerten durch mehrere Datenverarbeitungseinheiten zu ermöglichen. Ein dazu notwendiger Zeitversatz zwischen den Daten wird auf einfache Weise durch Zwischenspeicherung der Daten erzeugt.

In einer Ausgestaltung der Erfindung ist vorgesehen, daß ein erster Datenbus mit den zur Verarbeitung von Daten dienenden Mitteln der ersten und mindestens einer weiteren Datenverarbeitungseinheit gekoppelt ist, daß ein zweiter Datenbus mit den zur Verarbeitung von Daten dienenden Mitteln der ersten Datenverarbeitungseinheit und über jeweils ein in jeder weiteren Datenverarbeitungseinheit angeordnetes Speichermittel zum Zwischenspeichern von Daten mit den zur Verarbeitung von Daten dienenden Mitteln der jeweiligen weiteren Datenverarbeitungseinheit gekoppelt ist und daß bei mehreren weiteren Datenverarbeitungseinheiten alle Speichermittel in Reihe geschaltet sind.

Viele Signalprozessoren sind mit zwei Datenbussen und einer Datenverarbeitungseinheit ausgestattet. Die Datenbusse dienen zur gleichzeitigen Übertragung von Daten an einen in der Datenverarbeitungseinheit angeordneten Multiplizierer, der somit innerhalb eines Befehlszyklus das Produkt zweier Daten bilden kann. Die Erfindung ist in vorteilhafter Weise auf diese Signalprozessoren anwendbar und vergrößert deren Rechengeschwindigkeit, ohne daß weitere Datenbusse benötigt werden. Die Erweiterung eines Signalprozessors beschränkt sich auf das technisch leicht zu realisierende Anordnen mindestens einer weiteren Datenverarbeitungseinheit auf dem Chip eines solchen Signalprozessors. In der beschriebenen Ausgestaltung liefert der erste Datenbus Daten an die erste und mindestens eine weitere Datenverarbeitungseinheit, welche die Daten durch die dazu vorgesehenen Mittel parallel verarbeiten. Der zweite Datenbus liefert Daten an die datenverarbeitenden Mittel der ersten Datenverarbeitungseinheit und über Speichermittel zum Zwischenspeichern von Daten an die Mittel jeder weiteren Datenverarbeitungseinheit. Ist mehr als eine weitere Datenverarbeitungseinrichtung vorgesehen, sind alle Speichermittel zum Zwischenspeichern von Daten in Reihe geschaltet. Auf diese Weise ergibt sich, daß die über den zweiten Datenbus übertragenen Daten zeitlich versetzt, d.h. in unterschiedlichen Befehlszyklen, von den Datenverarbeitungseinheiten verarbeitet werden.

Typische Anwendungen von Signalprozessoren sind beispielsweise die Berechung von Autokorrelationsfunktionen, Kreuzkorrelationsfunktionen und die digitale Filterung mit FIR-Filtern. Bei diesen Anwendungen ist es erforderlich, Skalarprodukte von Datenvektoren zu bilden. Die Datenverarbeitungseinheiten sind somit zur Bildung von Produkten der zugeführten Daten und zur Summation der Produkte vorgesehen. Um diese Funktionen zu gewährleisten, ist es vorteilhaft, daß in den Datenverarbeitungseinheiten die zur Verarbeitung von Daten dienenden Mitteln jeweils einen eingangsseitig angeordneten Multiplizierer aufweisen, dessen Ausgang mit einem ersten Eingang einer arithmetisch/logischen Einheit gekoppelt ist und daß die arithmetisch/logische Einheit einen mit dem Ausgang eines Akkumultors gekoppelten zweiten Eingang und einen mit dem Eingang des Akkumulators gekoppelten Ausgang aufweist. Eingangsseitig empfangene Daten werden durch den jeweiligen Multiplizierer zunächst multipliziert und dann mit Hilfe der arithmetisch/logischen Einheit und dem Akkumulator aufsummiert. Die arithmetisch/logische Einheit wird im vorliegenden Anwendungsfall als Addierer verwendet. Um den Signalprozesor nicht auf die hier beschriebene Funktion, d.h. die Summation von Produkten, zu beschränken, ist die arithmetisch/logische Einheit mindestens der ersten Datenverarbeitungseinheit auch für andere arithmetische oder logische Funktionen vorgesehen.

3

Um den technischen Aufwand zur Realisierung des Signalprozessors gering zu halten, ist die Ausführung der arithmetisch/logischen Einheit jeder weiteren Datenverarbeitungseinheit als Addierer/Subtrahierer vorteilhaft.

Für den typischen Anwendungsfall der Berechnung von Skalarprodukten ist diese vereinfachte Ausführungsform ausreichend. Nur die arithmetisch/logische Einheit der ersten Datenverarbeitungseinheit ist für vielfältige arithmetische oder logische Operationen vorgesehen, um den Signalprozessor universell programmieren und einsetzen zu können.

Ein Ausführungsbeispiel der Erfindung wird nachstehend anhand der Zeichnungen näher erläutert. Es zeigen:

Fig. 1      das Blockschaltbild eines Signalprozessors,

Fig. 2      einen Teil des in Fig. 1 dargestellten Signalprozessors und

Fig. 3      ein Blockschaltbild eines digitalen Funktelefons mit einem Signalprozessor aus Fig. 1 und 2.

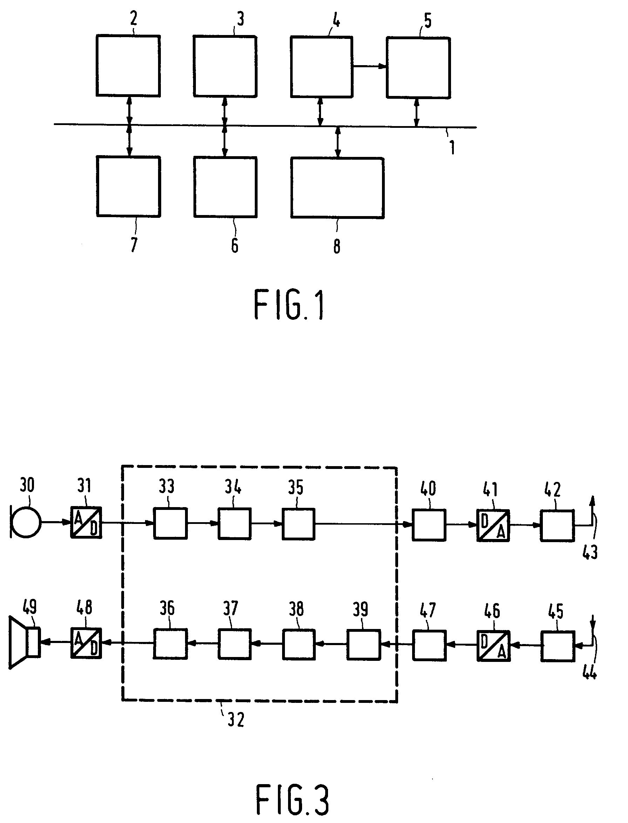

Der in Fig. 1 dargestellte Signalprozessor weist ein Bussystem 1 auf, über das mehrere Funktionsblöcke miteinander gekoppelt sind. Das Bussystem 1 enthält Busse zur Übertragung von Daten, Adressen und Kontrollsignalen. So weist das Bussystem 1 unter anderem ein Datenbussystem und einen Programmbus auf, die nicht im einzelnen dargestellt sind. Eine Adressierungseinheit 2 liefert Adressen an eine Speichereinheit 3, so daß zugehörige Speicherinhalte ausgelesen werden. Die Speichereinheit 3 besteht im allgemeinen aus einem ROM und/oder einem RAM. Weiterhin sind eine erste und zweite Datenverarbeitungseinheit 4 und 5 vorgesehen, die zur Verarbeitung der aus der Speichereinheit 3 ausgelesenen Daten dienen. Die zweite Datenverarbeitungseinheit 5 ist eingangsseitig nicht direkt mit dem Datenbussystem des Bussystems 1 verbunden, sondern erhält Daten über die erste Datenverarbeitungseinheit 4. Eine Programmspeichereinheit 6 ist über den Programmbus mit den an das Bussystem 1 angeschlossenen Einheiten verbunden.

An das Bussystem 1 ist weiterhin eine Peripherieeinheit 7 angeschlossen, die Ein-/Ausgabeeinheiten enthält. Über Steuerleitungen ist eine Steuereinheit 8 mit den am Bussystem 1 angeschlossenen Einheiten gekoppelt. Die Steuereinheit 8 steuert den Programmablauf und koordiniert den Zugriff der Einheiten 2 bis 7 auf das Bussystem 1.

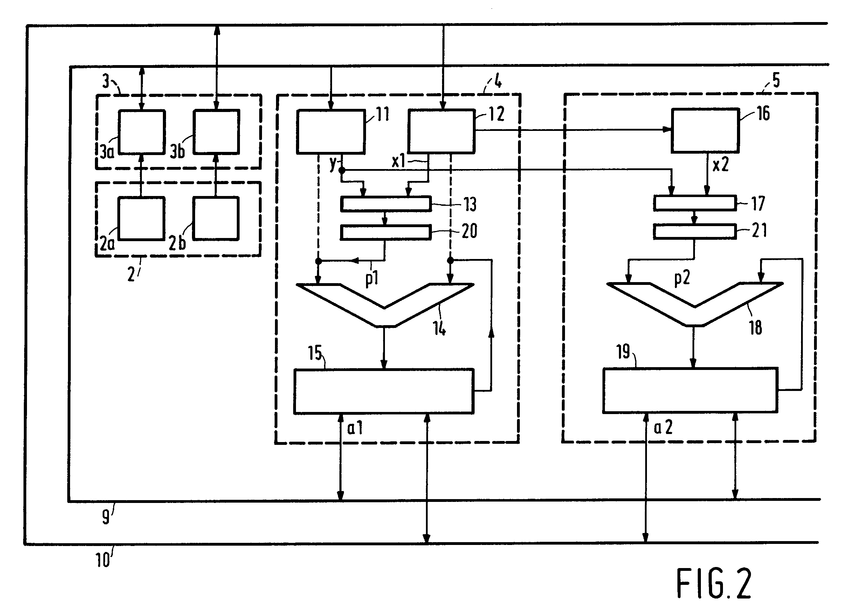

In Fig. 2 ist ein Teil des in Fig. 1 dargestellten Signalprozessors detaillierter dargestellt. Die Speichereinheit 3 weist einen ersten Datenspeicher 3a und einen zweiten Datenspeicher 3b auf. Der erste Datenspeicher 3a ist mit einem ersten Datenbus 9 und der zweite Datenspeicher 3b ist mit einem zweiten Datenbus 10 gekoppelt. Ein erster und zweiter Adressierungsblock 2a und 2b, die in der Adressierungseinheit 2 angeordnet sind, dienen zur Lieferung von Adressen an den ersten Datenspeicher 3a und den zweiten Datenspeicher 3b.

Weiterhin sind der Aufbau der ersten und der zweiten Datenverarbeitungseinheit 4 und 5 dargestellt. Auf der Eingangsseite der ersten Datenverarbeitungseinheit 4 ist ein erstes Register 11 vorgesehen, das Daten vom ersten Datenbus 9 empfängt. Ein zweites Register 12 empfängt Daten vom zweiten Datenbus 10. Beide Register 11 und 12 dienen zum Zwischenspeichern der empfangenen Daten. Die von den Registern 11 und 12 empfangenen Daten werden von einem Multiplizierer 13 multipliziert, der ein von ihm gebildetes Produkt p1 über ein Register 20 einem ersten Eingang einer arithmetisch/logischen Einheit 14 zuführt. Einem zweiten Eingang der arithmetisch/logischen Einheit 14, die die Funktion eines Addierers oder eines Subtrahierers ausübt, wird der Speicherinhalt eines Akkumulators 15 zugeführt, der mit dem Ausgangswert der arithmetisch/ logischen Einheit 14 überschrieben wird. Der Signalprozessor kann auch so programmiert werden, daß die arithmetisch/logische Einheit 14 andere arithmetische oder logische Operationen durchführt. Weiterhin kann der erste Eingang der arithmetisch/logischen Einheit 14 anstatt mit dem Ausgang des Multiplizierers 13 auch direkt vom Register 11 mit Daten beliefert werden. Auch eine direkte Verbindung des Ausgangs des Registers 12 mit dem zweiten Eingang der arithmetisch/logischen Einheit 14 anstatt mit einem Eingang des Multiplizierers 13 ist möglich. Der Ausgang des Akkumulators 15 ist entweder über den ersten oder den zweiten Datenbus 9 bzw. 10 mit der Speichereinheit 3 gekoppelt. Die Datenbusse 9 und 10 sind auch zum Datentransport von der Speichereinheit 3 zum Akkumulator 15 vorgesehen, beispielsweise um den Akkumulator 15 zu initialisieren.

Die zweite Datenverarbeitungseinheit 5 weist ein drittes Register 16 auf, das die im zweiten Register 12 zwischengespeicherten Daten empfängt, zwischenspeichert und an einen Multiplizierer 17 liefert. Der Multiplizierer 17 empfängt weiterhin die im ersten Register 11 zwischengespeicherten Daten. Die an den Ausgängen des ersten Registers 11 und des dritten Registers 16 anliegenden Daten werden multipliziert und das sich ergebende Produkt p2 wird über ein Register 21 auf einen ersten Eingang einer arithmetisch/logischen Einheit 18 gegeben. Deren zweiter Eingang ist mit einem Ausgang eines Akkumulators 19 gekoppelt, der mit den Ausgangswerten der arithmetisch/logischen Einheit 18 überschrieben wird. Die arithmetisch/logische Einheit 18 ist im vorliegenden Fall ein einfacher Addierer/Subtrahierer. Sie kann, muß aber keine weiteren Funktionen realisieren können. Der Akkumulator 19 ist analog zum Akkumulator 15 über den ersten oder den zweiten Datenbus 9 bzw. 10 mit der Speichereinheit 3 gekoppelt.

Der vorliegende Signalprozessor eignet sich insbesondere zur Berechnung einer Menge von n Skalarprodukten der Form

$$c(i) = d(i) + \sum_{j=0}^{m-1} a(j)*b(j+i) \quad , \quad i = 0,1,\ldots,n-1$$

a(j) und b(j + i) sind Daten, die sich sich als Komponenten zweier Datenvektoren $\vec{a}$ und $\vec{b}_i$ der Dimension m deuten lassen. Der Datenvektor $\vec{a}$ wird identisch zur Berechnung aller Skalarprodukte c(i) verwendet. Die Anzahl an unterschiedlichen Datenvektoren $\vec{b}_i$ entspricht im vorliegenden Fall der Anzahl n an zu berechnenden Skalarprodukten c(i). Die Komponenten der zur Berechung der Skalarprodukte c(i) verwendeten Datenvektoren $\vec{b}_i$ sind wie aus der angegebenen Formel ersichtlich teilweise identisch. Die Werte d(i) stellen die Anfangswerte dar, mit denen die zugehörigen beiden Akkumulatoren 15 und 19 zu Beginn einer Berechnung von zwei Skalarprodukten c(i) und c(i-1) initialisiert werden (insbesondere wie im vorliegenden Ausführungsbeispiel mit dem Wert Null). Solche Skalarprodukte werden insbesondere bei der Berechung von Autokorrelationsfunktionen, Kreuzkorrelationsfunktionen und bei einer digitalen Filterung durch FIR-Filter gebildet.

Anhand der unten angeführten Tabelle wird die parallele Berechnung zweier Skalarprodukte am Beispiel der Berechnung der Skalarprodukte c(0) und c(1) näher erläutert.

| | x1 | x2 | y | p1 | p2 | a1 | a2 |
|---|---|---|---|---|---|---|---|
| 1 | b(0) | ? | ? | ? | ? | 0 | 0 |
| 2 | b(1) | b(0) | a(0) | ? | ? | 0 | 0 |
| 3 | b(2) | b(1) | a(1) | a(0)*b(1) | a(0)*b(0) | 0 | 0 |
| 4 | b(3) | b(2) | a(2) | a(1)*b(2) | a(1)*b(1) | a(0)*b(1) | a(0)*b(0) |
| 5 | b(4) | b(3) | a(3) | a(2)*b(3) | a(2)*b(2) | $\sum_{j=0}^{1} a(j)*b(j+1)$ | $\sum_{j=0}^{1} a(j)*b(j)$ |
| 6 | b(5) | b(4) | a(4) | a(3)*b(4) | a(3)*b(3) | $\sum_{j=0}^{2} a(j)*b(j+1)$ | $\sum_{j=0}^{2} a(j)*b(j)$ |
| $\cdot$ $\cdot$ $\cdot$ | $\cdot$ $\cdot$ $\cdot$ | $\cdot$ $\cdot$ $\cdot$ | $\cdot$ $\cdot$ $\cdot$ | $\cdot$ $\cdot$ $\cdot$ | $\cdot$ $\cdot$ $\cdot$ | $\cdot$ $\cdot$ $\cdot$ | $\cdot$ $\cdot$ $\cdot$ |
| m+3 | b(m+2) | b(m+1) | a(m+1) | a(m)*b(m+1) | a(m)*b(m) | $\sum_{j=0}^{m-1} a(j)*b(j+1)$ | $\sum_{j=0}^{m-1} a(j)*b(j)$ |

Die von 1 bis m + 3 mit Hilfe der ersten Spalte durchnumerierten Zeilen der Tabelle dienen zur Erläuterung von m + 3 erforderlichen Befehlszyklen des Signalprozessors. x1 und x2 stellen den jeweiligen Ausgangswert bzw. Speicherinhalt der Register 12 und 16 dar. y entspricht dem jeweiligen am Ausgang des Registers 11 anliegenden Wert. Die von den Multiplizierern 13 und 17 gelieferten Produkte stehen in den Spalten unter p1 und p2. a1 und a2 sind die Speicherinhalte der Akkumulatoren 15 und 19. a1 und a2 werden jeweils vor der Berechnung zweier c(i) ohne Einschränkung der Allgemeinheit zu d(i) = 0 initialisiert.

Der durch Fig. 2 näher erläuterte Signalprozessor verarbeitet Daten nach dem Prinzip der sogenannten "Pipeline"-Verarbeitung. Im vorliegenden Fall wird eine dreistufige "Pipeline"-Verarbeitung verwendet, d.h. die Datenverarbeitungseinheiten weisen drei Stufen auf. Die drei Stufen werden von den über die Datenbusse 9 und 10 übertragenen Daten in drei aufeinanderfolgende Befehlszyklen durchlaufen. In der ersten Stufe werden Daten in die eingangsseitig angeordneten Register 11, 12 und 16 geladen. In der zweiten Stufe werden gleichzeitig aus im vorausgehenden Befehlszyklus in den Registern 11, 12 und 16 gespeicherten Daten mit Hilfe der Multiplizierer 13 und 17 Produkte p1 und p2 gebildet, die in den Registern 20 und 21 zwischengespeichert werden. In der dritten Stufe werden gleichzeitig die Produkte p1 und p2 der im vorausgehenden Befehlszyklus in den Registern 20 und 21 zwischengespeicherten Produkte auf den Inhalt der Akkumulatoren 15 und 19 aufsummiert. Die zweite Stufe der "Pipeline"-Verarbeitung mit einer Zwischenspeicherung in den Registern 20 und 21 wie im vorliegenden Ausführungsbeispiel ist bei allen Signalprozessoren notwendig, deren Datenverarbeitungseinheiten nicht in der Lage sind, innerhalb eines Befehlszyklus eine Multiplikation und eine Aufsummation des entstandenen Produktes auf den Inhalt der Akkumulatoren 15 und 19 durchzuführen. Bei Signalprozesoren, die dazu in der Lage sind, kann die zweite Stufe bzw. kann die Zwischenspeicherung in den Registern 20 und 21 entfallen.

Den Registern 11 und 12 werden über die Datenbusse 9 und 10 in den Datenspeichern 3a und 3b abgelegte Daten zugeführt. Zum Auslesen der im jeweiligen Befehlszyklus erforderlichen Daten liefert die Adressierungseinheit 2 programmgesteuert über zwei Adressbusse die entsprechenden Adressen an die Datenspeicher 3a und 3b. Zur Berechung der Skalarprodukte c(0) und c(1) erfolgt zunächst eine Initialisierung in den ersten drei Befehlszyklen.

Im ersten Befehlszyklus überträgt der Datenspeicher 3b den Wert b(0) an das Register 12. Im zweiten Befehlszyklus wird der Wert b(0) an das Register 16 der zweiten Datenverarbeitungseinheit 5 übertragen. In die Register 11 und 12 der ersten Datenverarbeitungseinheit 4 werden aus den Datenspeichern 3a und 3b die Daten a(0) und b(1) eingelesen.

Im dritten Befehlszyklus bildet der Multiplizierer 13 das Produkt p1 = a(0)*b(1) aus den Speicherinhalten der Register 11 und 12 des vorherigen zweiten Befehlszyklus und legt p1 im Register 20 ab. Der Multiplizierer 17 liefert das Produkt p2 = a(0)*b(0) aus den Speicherinhalten der Register 11 und 16 des vorherigen zweiten Befehlszyklus und legt p2 im Register 21 ab. Analog zu den vorherigen Befehlszyklen wird dann der Speicherinhalt des Registers 16 mit dem Speicherinhalt des Registers 12 überschrieben. Nun können in die Register 11 und 12 weitere Daten a(1) und b(2) eingelesen werden.

Mit den beschriebenen ersten drei Befehlszyklen ist die Initialisierung abgeschlossen. Die Register 11 und 16 weisen im ersten Befehlszyklus unbestimmte Speicherinhalte auf. Die in den Registern 20 und 21 gespeicherten Werte p1 und p2 sind im ersten und zweiten Befehlszyklus unbestimmt. Der Speicherinhalt der Akkumulatoren 15 bzw. 19 ist während der Initialisierung auf d(1) bzw. d(0), d.h. im vorliegen Beispiel auf den Wert Null, gesetzt.

Im vierten Befehlszyklus erfolgt erstmals eine Aufsummation der im vorausgehenden Befehlszyklus durch die Multiplizierer 13 und 17 ermittelten Produkte p1 und p2 auf die Akkumulatoren 15 und 19. Die weitere Verarbeitung von Daten erfolgt analog zur oben beschriebenen Funktionsweise des Signalprozessors und läßt sich aus der Tabelle in Verbindung mit Fig. 2 entnehmen. Im Befehlszyklus m + 3 sind die Speicherinhalte a1 und a2 der Akkumulatoren 15 und 19 gleich den Skalarprodukten c(1) und c(0). Diese werden über die Datenbusse 9 und 10 an die Speichereinheit 3 übertragen und dort zur Weiterverarbeitung abgespeichert. Danach kann die parallele Berechnung der beiden nächsten Skalarprodukte c(2) und c(3) durchgeführt werden.

Vernachlässigt man die wenigen Befehlszyklen zur Initialisierung, so ergibt sich für den vorliegenden Signalprozessor gegenüber einem Signalprozessor mit nur einer Datenverarbeitungseinheit eine Verdoppelung der Rechengeschwindigkeit bei der Berechnung von Skalarprodukten der genannten Art. Eine Erhöhung der Rechengeschwindigkeit läßt sich prinzipiell immer dann erreichen, wenn die zur Berechung eines Skalarproduktes notwendigen Daten wenigstens teilweise auch zur Berechnung eines oder mehrerer anderer Skalarprodukte benötigt werden.

Zur Erhöhung der Rechengeschwindigkeit können nicht dargestellte weitere Datenverarbeitungseinheiten im Signalprozessor angeordnet werden, die wie die Datenverarbeitungseinheit 5 aufgebaut sind. Alle eingangsseitig angeordneten Register dieser weiteren Datenverarbeitungseinheiten sind in Reihe zu den Registern 12 und 16 geschaltet. Der Ausgang des Registers 11 ist mit jeweils einem Eingang der Multiplizierer aller Datenverarbeitungseinheiten verbunden. Die berechneten Skalarprodukte der zusätzlichen Datenverarbeitungseinheiten werden ebenfalls über den Datenbus 9 oder den Datenbus 10 an die Speichereinheit 3 übertragen und dort zur spätern Weiterverarbeitung gespeichert. Vorteilhaft sind für die zweite Datenverarbeitungseinheit 5 und jede weitere Datenverarbeitungseinheit keine zusätzlichen Datenbusse notwendig, so daß der zusätzliche schaltungstechnische Aufwand gering ist.

Die Register 11 und 12 bzw. 20 und 21 dienen nur zur Sicherstellung einer fehlerfreien "Pipeline"-Verarbeitung. Bei hinreichend schnellen Signalprozessoren kann eine zweistufige "Pipeline"-Verarbeitung erfolgen, so daß die Register 20 und 21 überflüssig sind.

Das in der Fig. 3 dargestellte Blockschaltbild eines digitalen Funktelefons enthält einen Sende- und Empfangsweg. Die von einem Mikrofon 30 empfangenen Sprachsignale werden über einen Analog-Digital-Umsetzer 31 in binär codierte Datenworte umgesetzt. Diese Datenworte werden einem Signalprozessor 32 zugeführt. Für die verschiedenen Funktionen, die der Signalprozessor 32 durchführt, sind in der Fig. 3 im Signalprozessor 32 die Blöcke 33 bis 39 dargestellt. Mit den vom Analog-Digital-Umsetzer 31 erzeugten Datenworten wird im Block 33 eine Sprachcodierung, dann im Block 34 eine Kanalcodierung und anschließend im Block 35 eine Verschlüsselung durchgeführt. Diese verschlüsselten Datenworte werden in einem Modulator 40 GMSK-moduliert. Dieser ist mit einem Ausgang des Signalprozessors 32 verbunden. Anschließend werden die modulierten digitalen Signale in einem Digital-Analog-Umsetzer 41 in analoge modulierte Signale umgesetzt. Diese modulierten analogen Signale werden einer Sendeschaltung 42 zugeführt, die Funksignale erzeugt, welche über eine Antenne 43 abgestrahlt werden. Der bisher beschriebene Weg stellt den Sendeweg des digitalen Funktelefons dar.

Der Empfangsweg des digitalen Funktelefons wird im folgenden beschrieben:
Von einer Antenne 44 empfangene analoge Funksignale werden in einer Empfangsschaltung 45 verarbeitet und analoge modulierte Signale einem Analog-Digital-Umsetzer 46 zugeführt. Die von dem Analog-Digital-Umsetzer abgegebenen digital modulierten Signale werden in einem Demodulator 47 demoduliert und dem Signalprozessor 32 zugeführt. Der Block 39 im Signalprozessor 32 soll die anschließende Entzerrung der demodulierten Signale aufzeigen. Anschließend wird eine Entschlüsselungsfunktion durchgeführt, die durch den Block 38 symbolisiert ist. Nach einer Kanaldecodierung im Block 37 und einer Sprachdecodierung im Block 36 leitet der Signalprozessor 32 digitale Datenworte einem Digital-Analog-Umsetzer 48 zu, der die analogen Sprachsignale zu einem Lautsprecher 49 gibt.

Der Signalprozessor 32 ist nicht nur in einer Mobilstation eines Mobilfunksystems als Funktelefon einsetzbar, sondern auch in einer Basisstation eines solchen Systems. Die in Fig. 2 erläuterte Struktur eines Signalprozessors ist weiterhin nicht auf Signalprozessoren beschränkt. So ist diese Struktur beispielsweise auch auf speziell für Funkgeräte eines Mobilfunksystems (Mobil- und Basisstationen) entwickelten Mikrocomputern bzw. Chips realisierbar.

**Patentansprüche**

1.  Signalprozessor mit einer Datenverarbeitungseinheit (4) mit Mitteln (13, 14, 15) zur Verarbeitung von Daten durch arithmetische oder logische Operationen,
    <u>dadurch gekennzeichnet</u>,
    daß mindestens eine zur Datenverarbeitungseinheit (4) parallel arbeitende weitere Datenverarbeitungseinheit (5) mit Mitteln (17, 18, 19) zur Verarbeitung von aus den der Datenverarbeitungseinheit (4) zugeführten Daten abgeleiteten Daten vorgesehen ist.

2.  Signalprozessor nach Anspruch 1,
    <u>dadurch gekennzeichnet</u>,
    daß vorgesehen ist, die den Mitteln (13, 14, 15) der ersten Datenverarbeitungseinheit (4) zugeführten Daten im gleichen Befehlszyklus auch den Mitteln (17, 18, 19) mindestens einer weiteren Datenverarbeitungseinheit (5) zuzuführen.

3.  Signalprozessor nach Anspruch 1 oder 2,
    <u>dadurch gekennzeichnet</u>,
    daß vorgesehen ist, die den Mitteln (13, 14, 15) der ersten Datenverarbeitungseinheit (4) zugeführten Daten den Mitteln (17, 18, 19) mindestens einer weiteren Datenverarbeitungseinheit (5) in einem anderen Befehlszyklus zuzuführen.

4.  Signalprozessor nach einem der Ansprüche 1 bis 3,
    <u>dadurch gekennzeichnet</u>,
    daß ein erster Datenbus (9) mit den zur Verarbeitung von Daten dienenden Mitteln (13, 14, 15) der ersten und mindestens einer weiteren Datenverarbeitungseinheit (4, 5) gekoppelt ist,

daß ein zweiter Datenbus (10) mit den zur Verarbeitung von Daten dienenden Mitteln (13, 14, 15) der ersten Datenverarbeitungseinheit (4) und über jeweils ein in jeder weiteren Datenverarbeitungseinheit (5) angeordnetes Speichermittel (16) zum Zwischenspeichern von Daten mit den zur Verarbeitung von Daten dienenden Mitteln (17, 18, 19) der jeweiligen weiteren Datenverarbeitungseinheit (5) gekoppelt ist und

daß bei mehreren weiteren Datenverarbeitungseinheiten alle Speichermittel (16) in Reihe geschaltet sind.

5.  Signalprozessor nach einem der Ansprüche 1 bis 4,
    dadurch gekennzeichnet,
    daß die Datenverarbeitungseinheiten (4, 5) jeweils zur Bildung von Produkten der zugeführten Daten und zur Summation der Produkte vorgesehen sind.

6.  Signalprozessor nach Anspruch 5,
    dadurch gekennzeichnet,
    daß in den Datenverarbeitungseinheiten (4, 5) die zur Verarbeitung von Daten dienenden Mittel (13, 14, 15, 17, 18, 19) jeweils einen eingangsseitig angeordneten Multiplizierer (13, 17) aufweisen, dessen Ausgang mit einem ersten Eingang einer arithmetisch/logischen Einheit (14, 18) gekoppelt ist und
    daß die arithmetisch/logische Einheit (14, 18) einen mit dem Ausgang eines Akkumulators (15, 19) gekoppelten zweiten Eingang und einen mit dem Eingang des Akkumulators (15, 19) gekoppelten Ausgang aufweist.

7.  Signalprozessor nach Anspruch 5 oder 6,
    dadurch gekennzeichnet,
    daß in jeder weiteren Datenverarbeitungseinheit (5) die arithmetisch/logische Einheit (18) als Addierer/Subtrahierer ausgeführt ist.

8.  Funkgerät mit einem Signalprozessor mit einer Datenverarbeitungseinheit (4) mit Mitteln (13, 14, 15) zur Verarbeitung von Daten durch arithmetische oder logische Operationen,
    dadurch gekennzeichnet,
    daß mindestens eine zur Datenverarbeitungseinheit (4) parallel arbeitende weitere Datenverarbeitungseinheit (5) mit Mitteln (17, 18, 19) zur Verarbeitung von aus den der ersten Datenverarbeitungseinheit (4) zugeführten Daten abgeleiteten Daten vorgesehen ist.

FIG.1

FIG.3

9

FIG.2